# EUROPEAN PATENT APPLICATION

(11) **EP 3 961 844 A1**
(43) Date of publication of application: **02.03.2022**
(21) Application number: 20192838.9
(22) Date of filing: 26.08.2020
(51) Int. Cl.: H02J 3/38, H02J 13/00

(54) **ELECTRIC ENERGY PROVIDING SYSTEM WITH CENTRALIZED CONTROLLER**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

It is described a system (100, 200, 300) for providing electric energy, the system comprising: plural energy providing units (101_1,...,101_n), each energy providing unit comprising measurement equipment for measuring at least one operational parameter (115_1, 115_2, 115_3, 115a, 115b, 115c) of the energy providing unit; at least one environmental sensor (103a, 103b, 103c) installed at or close to selected energy providing units (101_3, 101_6, 101_n-2), in particular arranged at a periphery, adapted to measure an environmental condition (117a, 117b, 117c), in particular wind condition; a central controller (107) communicatively connected with the energy providing units (101_1,...,101_n) and adapted to at least one of: to supply virtual sensor data to the energy providing units based on the environmental condition (117a, 117b, 117c); to control (119a, 119b, 119c) operation of the energy providing units (101_1,...,101_n) based on measurement results (115a, 115b, 115c) received from the measurement equipment of each of the energy providing units and based on the environmental condition (117a, 117b, 117c).

## Description

### Field of invention

The present invention relates to a system and method for providing electric energy wherein the system has a central controller communicatively connected with plural energy providing units.

### Art Background

In current wind park configurations, each wind turbine may be equipped with measurement sensors, for example anemometers, ambient temperature sensors, wind speed sensors, wind vanes, etc. Many of these measurement sensors may be installed redundantly, i.e. there may be two anemometers installed on each wind turbine. The anemometers may conventionally only be used for decision of cut-in or cut-out of the wind turbine. The ambient temperature may be basically identical within the area of a wind farm. The ambient wind direction may be mainly uniform within the wind farm.

In a given wind farm, for example 100 wind turbines, there may be 200 anemometers installed, 100 ambient temperature sensors and 100 wind vanes. This represents a huge financial investment.

Currently, there is no communication between wind farms. Furthermore, there is hardly any information exchange or information flow within a wind farm between wind turbines. This may result in problems which could be prevented. For example, when a first wind farm experiences an extreme event (for example a heavy storm) which causes turbines to shutdown or damage, other wind farms which are located downstream of the first wind farm will be affected by the same or similar extreme event.

Furthermore, problems regarding grid instability occur in the prior art. Furthermore, conventionally, every wind turbine is equipped with its own controller for controlling operational behaviour. These controllers and also other equipment of the wind turbine may conventionally require regular updates which are installed individually on each wind turbine. This is cumbersome and time-consuming. Often this requires a manual process for a huge number of wind turbines and consequently, a complete software update may take several months.

Conventionally, every wind turbine is equipped with its own measurement devices. Further, every wind farm conventionally has to make "its own experiences" and does not know upfront about a critical event. Furthermore, every wind turbine receives conventionally its own software update and requires update on its own.

Thus, there may be a need for a system for providing electric energy and a corresponding method of providing electric energy, wherein the complexity of the system may be reduced, redundant components may be dispensed with or at least reduced, maintenance is simplified and also updating is simplified and accelerated.

### Summary of the Invention

This need may be met by the subject matter according to the independent claims. Advantageous embodiments of the present invention are described by the dependent claims.

According to an embodiment of the present invention it is provided a system for providing electric energy, the system comprising: plural energy providing units, each energy providing unit comprising measurement equipment for measuring at least one operational parameter of the energy providing unit; at least one environmental sensor installed at or close to selected energy providing units, in particular arranged at a periphery, adapted to measure an environmental condition, in particular wind condition; a central controller communicatively connected with the energy providing units and adapted to at least one of: to supply virtual sensor data to the energy providing units based on the environmental condition; to control operation of the energy providing units based on measurement results received from the measurement equipment of each of the energy providing units and based on the environmental condition.

The system for providing electric energy may not only provide electric energy, in particular to a utility grid, but may also consume electric energy (e.g. reactive power), in particular from the utility grid, as required. The energy providing units may for example provide or consume active and/or reactive power to or from the utility grid. The system for providing electric energy may be connected to one or more utility grids by one or more connection terminals.

Depending on the type of the energy providing units, the measurement equipment may be adapted to measure the respective operational parameter which is compatible with the particular type of energy providing unit. For example, the energy providing unit may comprise an energy storing unit, in particular comprising an accumulator or a battery. In this case, the operational parameter may for example comprise the loading capacity of the energy storing unit and/or the voltage and/or the current of the energy storing unit. The energy providing unit may in other embodiments comprise an energy producing unit. The system may comprise a mixture of energy storing units and energy producing units for example.

The at least one environmental sensor may belong to one of the energy providing units or may be installed at or close to the energy providing unit. The environmental sensor may for example be configured to measure wind condition, in particular wind speed and/or wind direction, temperature, humidity, rain, snow, etc. The environmental sensor may also be capable of measuring sunlight radiation incident on the energy providing unit or a particular area.

The central controller may comprise hardware and/or software. The central controller may be communicatively connected with the energy providing units by a communication network, such as the Internet or a mobile phone communication network or a satellite network or a combination thereof. The virtual sensor data may mimic data as measured by a (virtual) sensor which is assumed to be installed at the respective energy providing unit but which is actually not present or which is not necessarily present.

The environmental condition as measured by the at least one environmental sensor which has been measured at a particular location (close or at one of the selected energy providing units) may be input to a prediction model which is configured to predict the respective environmental condition at each position of each of the plural energy providing units. Thereby, for example a wake model may be employed. The central controller may in another embodiment be adapted to control the operation of the energy providing units based on measurement results received from the measurement equipment of each of the energy providing units and further based on the environmental condition. Thus, the central controller may receive essential operational parameters from the energy providing units and additionally receive the environmental condition provided by the at least one environmental sensor. In particular, several environmental sensors may be installed at several locations at or close to a number of selected energy providing units. In particular, those environmental sensors may be installed at a peripheral of the plural energy providing units, i.e. a peripheral of an area occupied by the plural energy providing units. In other embodiments, the environmental sensors may also be distributed across the area which is occupied by the energy providing units. However, not every energy providing unit may be required to carry or have an environmental sensor. Thereby, hardware may be reduced. Not every one of the energy providing units is required to have its own environmental sensor.

To control the operation of the respective energy providing unit may for example comprise sending control signals to one or more components of the respective energy providing unit, for example sending control signals to a converter which may be connected to a generator which is driven by a rotor having attached plural rotor blades. To control the operation for example of a wind power converting unit may comprise to control a blade pitch setting, to control a yawing setting, to control active power, to control reactive power, and so forth.

For controlling the operation of the energy providing unit, its own operational state is taken into account by the at least one operational parameter which is measured by the respective measurement equipment of this energy providing unit and which is supplied to the central controller. The operational parameter may for example comprise a mechanical and/or an electrical operational parameter of the energy providing unit. The operational parameter may for example also comprise temperature measurement values of one or more components of the energy providing unit. Thereby, it may be avoided to overload the energy providing units.

Since the plural energy providing units may be controlled and/or may receive virtual sensor data from a centralized controller, operation may be simplified and complexity may be reduced. Further, hardware may be reduced. In particular, each of the energy providing units does not necessarily comprise a complex own controller. However, the energy providing units may at least comprise a rudimentary simple controller in order to control the respective energy providing units for example in a case of emergency, such as failure of connection to the central controller.

In other embodiments, the central controller does not actually perform a control of the operation of the energy providing units but merely sends virtual sensor data to each of the energy providing units. In this embodiment, the energy providing units may comprise each its own controller which may control components of the respective energy providing unit based on the virtual sensor data and its own operational parameters.

According to an embodiment of the present invention, the energy providing units comprise at least one energy producing unit and/or at least one energy storing unit. Thereby, great flexibility may be provided. The system may therefore for example also comprise hybrid renewable energy producing units and/or batteries and/or accumulators. Thus, the system may for example be established based on a hybrid renewable energy production system for example.

According to an embodiment of the present invention, the energy producing unit comprises at least one of: a wind power converting unit; a solar power converting unit; a tidal power converting unit.

The wind power converting unit may conventionally also be referred to as a wind turbine. However, a conventional wind turbine may have a great number of environmental sensors installed. Furthermore, a conventional wind turbine may have a relatively complex controller. However, a wind power converting unit may not necessarily comprise an environmental sensor or a high number of environmental sensors. Furthermore, a wind power converting unit may not necessarily comprise a complex controller as is conventionally known. The wind power converting unit may comprise a tower, a nacelle mounted on top of the tower, a rotor which may be installed within the nacelle, wherein at the rotor, plural rotor blades are connected. The rotor may mechanically be coupled to a generator which, upon rotation of the rotor, produces electrical energy. The generator may electrically be coupled to a converter which may be adapted to convert for example a variable frequency power stream to a fixed frequency power stream.

A solar power converting unit may for example comprise one or more solar cells which may provide DC power upon radiation of sunlight received by the solar cells. The tidal power converting unit may comprise a turbine (driven by tidal water) connected to an electrical generator.

The system may comprise one type or several different types of energy providing units. Thereby, great flexibility is provided, in particular also supporting a hybrid energy production system, in particular hybrid renewable energy production system.

According to an embodiment of the present invention, each or at least one energy producing unit comprises: a local controller, adapted to control operation of the energy producing unit in case of emergency situation, in particular connection loss to the central controller.

The local controller may be configured or set up only for controlling in case of an emergency, such as disruption of the communication between the central controller and the respective energy providing unit. The local controller may for example only be configured for shutting down the respective energy providing unit in case of a failure of the communication to the central controller or in case of an emergency, in case of a malfunction of one of the components of the energy providing units, for example. The local controller may not require any update in case the controller is only provided for assuring a reliable and safe shutdown of the energy providing unit, for example. Thereby, safety may be improved while the complexity is maintained at an acceptable level.

According to an embodiment of the present invention, the energy providing units comprise wind power converting units, each comprising a generator mechanically coupled to a rotor having plural rotor blades attached, wherein in particular at least one of the wind power converting units comprises a converter electrically coupled to the generator.

The generator may for example comprise a doubly fed induction generator or a permanent magnet synchronous machine, for example. Thereby, conventionally available generators are supported. The converter may for example comprise an AC-DC converter portion, a DC link and a DC-AC converter portion. Each converter portion may comprise plural controllable switches, such as IGBTs. Operation of the converter may be controlled by for example a gate driver circuit which supplies gate driver signals to the gates of the controllable switches. The gate driver circuit may receive as input for example one or more control signals from the central controller. The control signals sent by the central controller may define for example active power output, reactive power output, power factor, rotational speed of the generator. Furthermore, the central controller may provide control signals regarding a pitch angle of at least one rotor blade, a yawing angle of the nacelle defining the orientation of the rotor axis of the rotor. Thereby, conventionally available wind turbines may be supported.

According to an embodiment of the present invention, the central controller is further adapted to control operation of the wind power converting units further based on wildlife detection and/or air traffic control transponders.

The operation may for example be controlled such that in particular time intervals depending on daylight, the operation may be reduced or power output may be reduced or rotational speed of the rotor may be reduced, since in those time intervals or in those light conditions bats may be active or birds may be active. Thereby, wildlife may effectively be protected. Furthermore, wildlife protection may then not be required in every individual controller of each of the wind power converting units. Furthermore, also information for flight traffic may be centralized thereby not requiring individual traffic control transponders on each of the wind power converting units. Thereby, hardware may be reduced or saved.

According to an embodiment of the present invention, the central controller is further adapted to apply a wake model for all or a subset of the wind power converting units, based on the environmental condition, in particular wind condition as detected by the sensor, in order to predict wind condition, in particular in real time, at all of the wind power converting units and/or wherein the central controller is further adapted to supply the wind condition at all of the wind power converting units to the respective wind power converting units as virtual sensor data.

The wake model may model environmental condition, in particular wind condition, at every location of every of the plural energy providing units, in particular the wind power converting units. Thereby, as input, the environmental condition as measured by at least one environmental sensor, in particular as measured by several environmental sensors, may be utilized. For predicting the wind condition or in general environmental conditions at every location of every wind power converting unit, the operational state of each of the wind power converting units may be taken into account. In particular, the yaw angle, the pitch angle may be taken into account together with the environmental condition as measured at one or more locations. In this manner, the wind condition downstream of one of the environmental sensors may be predicted and determined.

In one embodiment, the central controller is also configured to perform an optimization, for example for optimizing power output of the entire system. Thereby, for example, the wind power converting units may individually be controlled with different control signals depending on their respective positioning and the predicted environmental condition or wind condition at their respective positions.

According to an embodiment of the present invention, the central controller is further adapted to control operation of the wind power converting units further based on extreme weather condition as detected by at least one environmental sensor.

An extreme weather condition may be determined or detected when for example the wind speed as measured by the environmental sensor is above a predetermined threshold. The central controller may for example react by sending control signals to the wind power converting units which indicate to reduce power production or even shut down the respective power converting unit. Thereby, damage may be avoided. A wind power converting unit which is instructed by the central controller to shut down may not comprise any environmental sensor or at least may not comprise any wind condition sensor.

According to an embodiment of the present invention, the central controller is adapted to control at least one of: rated power, reactive power, rotational speed of the rotor, pitch angle of at least one rotor blade, yawing angle of a nacelle harbouring the rotor, curtailment, of each of the wind power converting units.

The central controller may control one or more of these parameters by sending respective signals to the generator, the converter, or any other equipment of the wind power converting unit, such as a yawing system or a pitch system. Thereby, it is enabled that also the central controller may enforce any operational mode as is conventionally be achieved by using an individual wind turbine controller.

According to an embodiment of the present invention, the operational parameters of the wind power converting unit comprise at least one value of: an active power output, a reactive power output, a rotational speed of the rotor, a pitch angle of at least one rotor blade, a yawing angle of a nacelle harbouring the rotor, a curtailment, a temperature of at least one component of the wind power converting unit, an electrical property of output power.

By taking one or more of these operational parameters into account for controlling the wind energy converting units, an operation may be improved. Furthermore, the capacity of active power or capacity of reactive power output in particular rated active power output and rated reactive power output (of each individual wind energy converting unit) may be taken into account. The curtailment may define for example a percentage of reduction of the rated active power or rated reactive power. In other embodiments, the curtailment may for example be defined as an absolute reduction of active power output or reactive power output. For example, the temperature of a main rotor bearing may be taken into account or a temperature of a yawing system or a temperature of a pitch bearing may be taken into account. The electrical property of the output power may for example comprise voltage and/or current and/or power factor.

According to an embodiment of the present invention, the wind power converting units are arranged in at least two wind parks, wherein each wind park has at least one connection terminal to which all wind power converting units of the respective wind park are connected and which is connected to a utility grid.

Conventionally, wind parks do not communicate with each other. Furthermore, conventionally, wind parks are not controlled by one central controller. The wind parks may have different sizes depending on the application. A small onshore wind park may for example comprise a low number of wind turbines, such as between 3 and 10 wind turbines. An offshore wind park may comprise 50 to 200 wind turbines. The electrical power of all wind power converting units of a single wind park may be collected at a common busbar or connection terminal which is, via one or more wind park transformers, connected to a utility grid. Thereby, conventional arrangement of wind turbines may be supported.

According to an embodiment of the present invention, each wind park comprises 3 to 200 wind power converting units spaced apart by a distance between 400 m and 2000 m, wherein a distance between centers of the two wind parks is in particular between 5 km and 50 km. Thereby, different configurations of wind parks may be supported.

According to an embodiment of the present invention, the system is configured to perform software updates of the central controller. In particular, software updates of individual (simplified) controllers may not be required. Those individual local controllers may only be provided or utilized in case of emergencies, which may not require regular updates of control software. In contrast, by updating the central controller using new software, the entire operational behaviour of the wind turbines may be changed or updated without requiring any update of any other individual component of the individual wind power converting units.

It should be understood, that features, individually or in any combination, disclosed, described, explained or provided for a system for providing electric energy, may also, individually or in any combination, provided, applied for or utilized for a method of providing electric energy, according to embodiments of the present invention and vice versa.

According to an embodiment of the present invention it is provided a method of providing electric energy, the system comprising: providing plural energy providing units, each energy providing unit comprising measurement equipment; measuring, by the measurement equipment of each energy providing unit, at least one operational parameter of the energy providing unit; measuring an environmental condition, in particular wind condition, by at least one environmental sensor installed at or close to selected energy providing units; using a central controller communicatively connected with the energy providing units to perform at least one of: supplying virtual sensor data to the energy providing units based on the environmental condition; controlling operation of the energy providing units based on measurement results received from the measurement equipment of each of the energy providing units and based on the environmental condition.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a system for providing electric energy according to an embodiment of the present invention;
Fig. 2 schematically illustrates another embodiment of a system for providing electric energy according to an embodiment of the present invention; and
Fig. 3 schematically illustrates still another embodiment of a system for providing electric energy according to an embodiment of the present invention.

### Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

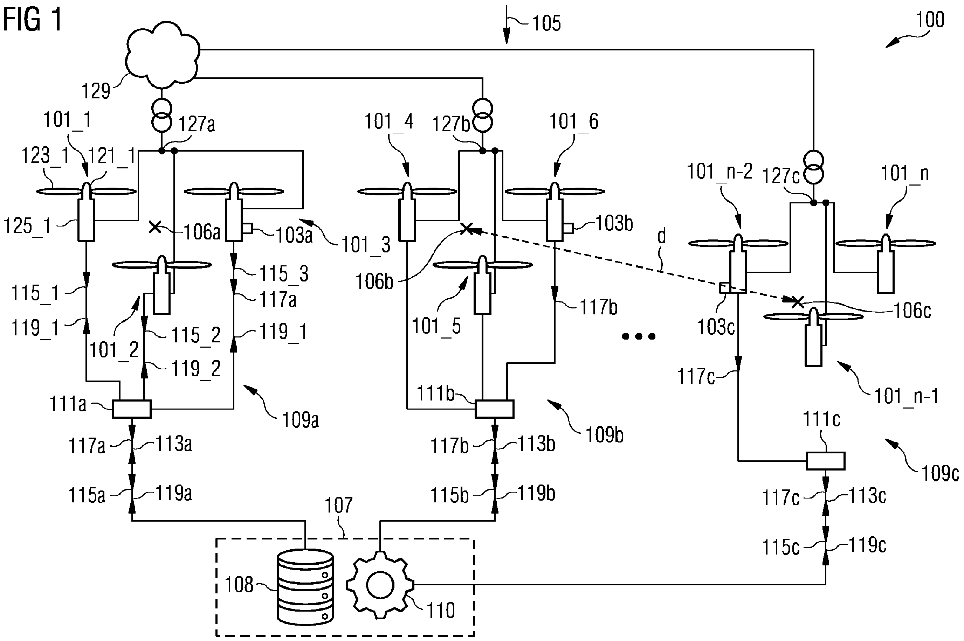

The system 100 for providing electric energy according to an embodiment of the present invention schematically illustrated in **Fig. 1** comprises plural energy providing units 101_1, ..., 101_n, where n is an integer e.g. between 5 and 1000. Each energy providing unit comprises measurement equipment not explicitly illustrated for measuring at least one operational parameter of the respective energy providing unit 101_1, ..., 101_n. The system 100 further comprises at least one environmental sensor 103a, 103b, 103c. The environmental sensors 103a, 103b, 103c are installed at or close to selected energy providing units, in particular energy providing units 101_3, 101_6, 101_n-2. The environmental sensors 103a, 103b, 103c are adapted to measure an environmental condition, in particular wind condition. In particular, the sensors may be capable to measure wind direction and wind velocity of the wind 105.

The system 100 further comprises a central controller 107 which is communicatively connected with the energy providing units 101_1, ..., 101_n. The central controller 107 may comprise a database or storage 108 and a processor 110. In the embodiment illustrated in Fig. 1 the energy providing units 101_1, ..., 101_n are arranged in at least two wind parks, namely a wind farm 109a, a wind farm 109b and a wind farm 109c. In other embodiments, more than three wind farms may be comprised in the system 100.

Each wind farm has (or may not have) a respective wind farm controller in the illustrated embodiment, in particular the wind farm 109a has a wind farm controller 111a, the wind farm 109b has a wind farm controller 111b and the wind farm 109c has a wind farm controller 111c.

The energy providing units illustrated in Fig. 1 are configured as wind power converting units 101_1, ..., 101_n. The wind power converting units 101_1, 101_2 and 101_3 belong to the wind farm 109a and are communicatively connected with the respective wind farm controller 111a. The same holds for the other wind farms 109b and 109c wherein the respective wind farm controller 111b, 111c, respectively, is communicatively connected with the wind power converting units comprised in the respective wind farm 109b or 109c, respectively.

The central controller 107 is communicatively connected to the wind power converting units via the respective wind farm controllers 111a, 111b, 111c. In other embodiments (e.g. in the absence of any wind farm controllers), the central controller 107 may be directly connected to the respective wind power converting units.

The central controller is adapted to at least one of: to supply virtual sensor data 113a, 113b, 113c to the wind power converting units via the wind farm controllers 111a, 111b, 111c and/or to control the operation of the wind power converting units based on measurement results 115a, 115b, 115c received from the measurement equipment of each of the wind power converting units 101_1, ..., 101_n and based on the environmental condition 117a, 117b, 117c as measured by the environmental sensors 103a, 103b, 103c.

Herein, the measurement results 115a represent measurement results of the wind power converting units 101_1, 101_2, 101_3 comprised in the wind farm 109a. In particular, the central controller considers the individual measurement results 115_1 of wind power converting unit 101_1, the measurement results 115 2 of the wind power converting unit 101 2 and the individual results 115_3 of the wind power converting unit 101 3. Similarly, the central controller considers for controlling the respective wind power converting unit also the measurement results of the other individual wind power converting units comprised in the wind farm 109b and the wind farm 109c for controlling the same.

The control of operation of the respective wind power converting units is achieved by sending control signals 119a, 119b and 119c to the respective wind park controllers 111a, 111b, 111c, respectively, from the central controller 107. The respective wind park controllers 111a, 111b, 111c then distribute the respective individual control signals 119_1, 119_2, 119_3 to the wind power converting units 101_1, 101_2, 101_3, respectively, comprised in the wind farm 109a. Similarly, the other wind park controllers distribute the control signals 119b and 119c to the wind power converting units comprised in the respective wind farm. Thus, the respective wind park controllers 111a, 111b, 111c may not perform any control by themselves but merely function as dispatcher or distributor of control signals received from the central controller 107.

In the embodiment illustrated in Fig. 1, the energy providing units are realized as energy producing units, in particular realized as wind power converting units. Thereby, each wind power converting unit comprises a rotor 121 1 to which mechanically plural rotor blades 123_1 are connected. The rotor 121_1 of the wind power converting unit 101 1 drives a not illustrated generator harboured in a nacelle 125_1. In other embodiments, the system may additionally or alternatively to the wind power converting units comprise solar power converting units and/or tidal power converting units and/or energy storing units, such as batteries and/or accumulators.

Each of the wind power converting units 101_1, ..., 101_n may comprise a local controller (not explicitly illustrated) which is adapted to control operation of the respective wind power converting unit in case of an emergency situation, in particular in case when there is a connection loss to the central controller 107.

The environmental sensors 103a, 103b, 103c may also sense an extreme weather condition or extreme environmental condition and the central controller may control the wind power converting units also based on the extreme weather condition. The control signals 119a, 119b, 119c sent from the central controller 107 to the respective wind power converting units via the respective wind farm controllers 111a, 111b, 111c may define a value of for example rated power, active power, reactive power, rotational speed of the rotor, pitch angle of at least one rotor blade, yawing angle of a nacelle harbouring the rotor and/or a curtailment of each of the wind power converting units.

The operational parameters 115_1, 115_2, 115_3 (collectively labelled with reference sign 115a for the wind farm 109a) may comprise at least one value of an active power output, a reactive power output, a pitch angle of at least one rotor blade, a yawing angle of a nacelle harbouring the rotor, a curtailment, a temperature of at least one component of the wind power converting unit or/and an electrical property of output power.

Each wind park 109a, 109b, 109c comprises a respective wind park connection terminal 127a, 127b, 127c to which the power output terminals of the respective wind power converting units are connected. The connection terminal 127a, 127b, 127c of all wind turbines is connected to one or more utility grids 129. A distance d between centers 106b and 106c of two adjacent wind parks 109b, 109c may range for example between 5 km and 50 km.

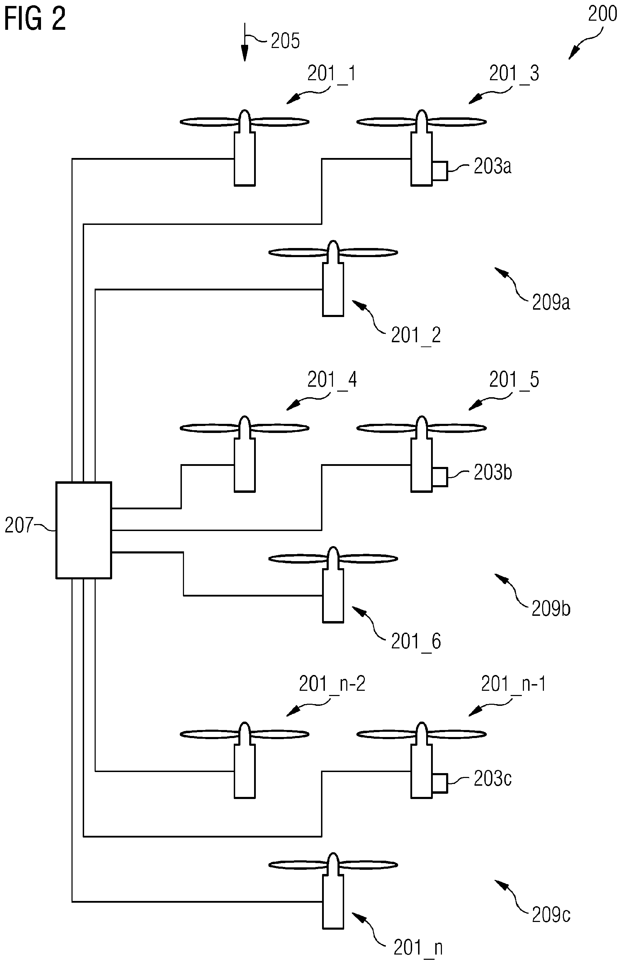

**Fig. 2** schematically illustrates a system 200 for providing electric energy according to another embodiment of the present invention. It should be noted that structures or elements in different figures are labelled with reference signs differing only in the first digit. A description of one electric not explicitly described with respect to one embodiment may be taken from the description of the corresponding unit or structure or element as described with reference to another embodiment.

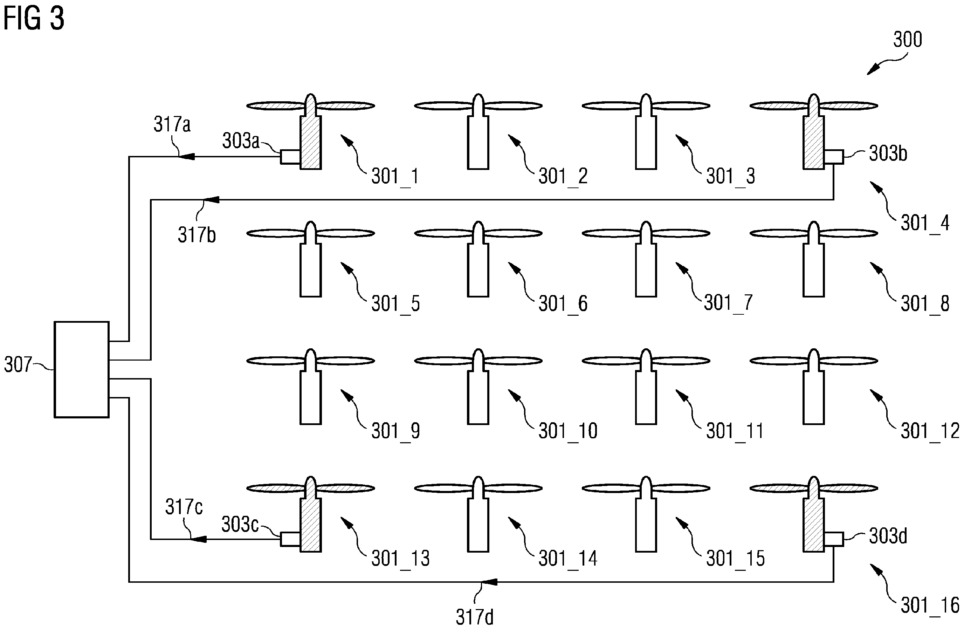

The energy providing units illustrated in Fig. 2 or 3 may exchange signals similarly as in detail described with respect to Fig. 1.

In the embodiment illustrated in Fig. 2, the central controller 207 is directly connected to each of the energy providing units 201_1, 201_n. Also, in the embodiment illustrated in Fig. 2, the energy providing units are in particular configured as wind power converting units 201_1,..., 201_n are arranged in plural wind parks 209a, 209b, 209c. The central controller 207 receives the environmental condition 217a, 217b, 217c from the environmental sensors 203a, 203b, 203c and is configured to apply a wake model in order to predict the wind conditions at other positions different from the position of the environmental sensors. Thereby, it is possible to predict the wind conditions for all other wind converting units 201_1, ..., 201_n. Furthermore, an extreme event detected by one of the environmental sensors, for example a heavy storm, may be detected and may be taken into account to appropriately control all the wind power converting units.

For example, the wind farm 209b is located, relative to the wind direction 205, downstream of the wind farm 209a. Thus, an extreme weather condition may for example be detected by the environmental sensor 203a and the wind farm 209b may be controlled taking into account the detected extreme weather condition expected to affect the wind farm 209b with a time delay. In particular, all information on current wind conditions as for example detected by one of the environmental sensors may be used to predict wind conditions on all other wind farms, in particular using a wake model. Thereby, much better control over short-term production may be possible. Better prediction may lead to reduced safety factors, for example less turbine curtailments in high wind periods which may lead to increased production.

**Fig. 3** illustrates a system 300 according to another embodiment of the present invention. In the embodiment illustrated in Fig. 3, the wind power converting units 301_1, 301_4, 301_13, 301_16 arranged at the corners of the area occupied by all wind power converting units are equipped with environmental sensors 303a, 303b, 303c, 303d. All other wind power converting units are not necessarily equipped with such an environmental sensor. The central controller 307 receives the environmental conditions 317a, 317b, 317c and 317d from the respective environmental sensors. Furthermore, all wind power converting units send their operational parameters to the central controller 307 similarly as illustrated in detail in Fig. 1. The reaction on the sensor data 317a, ..., 317d as well as reaction on the measurement values of the operational parameters is managed by the centralized controller 307 which defines the best strategy and enables (in case of environmental sensors) for example turbine cut-in, turbine cut-out, reaction on temperature, and control of other operational parameters, such as reactive power, active power, pitch angle, yawing angle and so forth. Thereby, a smaller number of sensors than utilized or employed in conventional systems may be provided. The sensors 303a, 303b, 303c, 303d may for example comprise an anemometer or a wind vane. Furthermore, wildlife detection and/or air traffic control transponder capability may be comprised within the sensors.

In embodiments illustrated in Figs. 2 and 3, respective wind park controllers may be dispensed with. Also the embodiment illustrated in Fig. 1 may not necessarily comprise the respective wind farm controllers. In this case, the central controller 107 may communicatively directly connected to all of the energy providing units.

Also extreme event information is handled centrally by the respective central controller and wind farms which will experience critical conditions may be identified (via for example machine learning based on wind direction, wind speed, location of wind farms) and proper measures may be performed.

The centralized controller may be employed to predict wind conditions for all wind farms in real-time. Thereby, much better control over short-term production may be possible. In one embodiment, the operation of the wind power converting units may completely be defined centrally by the respective central controller 107, 207, 307. However, the wind power converting units may have an emergency control for situations of connection loss, otherwise they are operated fully remotely from the centralized controller.

In other embodiments, the wind power converting units may comprise respective wind turbine controllers. In this case, the central controller may send virtual sensor data representing predicted or measured wind condition for example measured by sensors installed close to or at selected wind power converting units.

The centralized control architecture may lead to advantages for updating control or maintenance software. Conventionally, updates nowadays may take months to be deployed in the complete fleet of wind turbines. In embodiments of the present invention, an update is realized by updating only the central controller without necessarily requiring update of wind turbine controllers. Thereby, costs may significantly be reduced. An advantage may be that the identical software version may be achieved or installed in a very short time. Thereby, also system complexity may be reduced due to less hardware which may result in reduced internal costs.

Furthermore, root cause analysis may be simpler, because data may be available instantaneous instead of manual downloads of data from each wind turbine.

The communication between the central controller and each of the energy providing units may for example be realized via a network, for example the 5G network or the Internet. The 5G network may enable higher bandwidths with low latency. Thereby, remote, real-time control of the wind turbines may be possible.

Embodiments of the present invention may enable to downgrade the wind turbine controllers since, a high amount of control is performed by the centralized controller. Furthermore, instead of equipping every wind turbine with sensors that have similar readings between turbines, only a subset of turbines in a wind farm may be equipped with for example environmental sensors. For example, only turbines at edges or margins of the wind farm may be equipped with sensors (for example anemometer, temperature sensor, wind vane, ...) to reflect different wind directions.

Further examples for redundant sensors may be wildlife detection, for example for detecting bats or birds and/or air traffic control transponders. In case a first wind farm experiences an extreme event (such as a gust, wave), shutdown of this wind farm may be required. Since the information regarding the extreme event is transmitted from the respective environmental sensor of the first wind farm to the central controller, the central controller advantageously can control a second wind farm for example downstream the extreme event. Thereby, safety may be improved, and harm may be avoided.

Furthermore, all information on current wind conditions can be used to predict wind conditions on all wind farms. Thereby, a much better control over short-term production may be possible. The prediction may lead to reduced safety factors, for example less turbine curtailments in high wind periods which may lead to increased production.

Embodiments allow to dispense with maintaining a high number of wind turbine controllers, since only the central controller needs to be maintained. Furthermore, a simple deployment "at one shot" is enabled instead of incremental updates as performed in a conventional system. Furthermore, thereby, it may be achieved to have identical software versions running for controlling all wind turbines. Furthermore, the central controller receives the measurement results regarding the operational parameters. Thus, all operational parameters of all wind power converting units are available for example for state analysis, performance analysis, diagnosis and so forth.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. System (100, 200, 300) for providing electric energy, the system comprising:
plural energy providing units (101_1,...,101_n), each energy providing unit comprising measurement equipment for measuring at least one operational parameter (115_1, 115_2, 115_3, 115a, 115b, 115c) of the energy providing unit;
at least one environmental sensor (103a, 103b, 103c) installed at or close to selected energy providing units (101_3, 101_6, 101_n-2), in particular arranged at a periphery, adapted to measure an environmental condition (117a, 117b, 117c), in particular wind condition;
a central controller (107) communicatively connected with the energy providing units (101_1,...,101_n) and adapted to at least one of:
to supply virtual sensor data to the energy providing units based on the environmental condition (117a, 117b, 117c);
to control (119a, 119b, 119c) operation of the energy providing units (101_1,...,101_n) based on measurement results (115a, 115b, 115c) received from the measurement equipment of each of the energy providing units and based on the environmental condition (117a, 117b, 117c).

2. System according to the preceding claim, wherein the energy providing units comprise at least one energy producing unit and/or at least one energy storing unit.

3. System according to the preceding claim, wherein the energy producing unit comprises at least one of:
a wind power converting unit (101_1,...,101_n);
a solar power converting unit;
a tidal power converting unit.

4. System according to one of the three preceding claims, each or at least one energy producing unit (101_1,...,101_n) comprising:
a local controller, adapted to control operation of the energy producing unit in case of emergency situation, in particular connection loss to the central controller.

5. System according to one of the preceding claims, wherein the energy providing units comprise wind power converting units (101_1,...,101_n), each comprising a generator mechanically coupled to a rotor (121_1) having plural rotor blades (123_1) attached,
wherein in particular at least one of the wind power converting units comprises a converter electrically coupled to the generator.

6. System according to the preceding claim, wherein the central controller is further adapted to control operation of the wind power converting units (101_1,...,101_n) further based on wildlife detection and/or air traffic control transponders.

7. System according to one of the two preceding claims,
wherein the central controller (107) is further adapted to apply a wake model for all or a subset of the wind power converting units, based on the environmental condition (117a, 117b, 117c), in particular wind condition as detected by the sensor (103a, 103b, 103c), in order to predict wind condition, in particular in real time, at all of the wind power converting units and/or
wherein the central controller is further adapted to provide the wind condition at all of the wind power converting unit locations to the respective wind power converting units as virtual sensor data.

8. System according to one of the preceding claims 5 to 7, wherein the central controller (107) is further adapted to control operation of the wind power converting units further based on extreme weather condition as detected by at least one environmental sensor.

9. System according to one of the preceding claims 5 to 8, wherein the central controller (107) is adapted to control at least one of:
rated power,
active power,
reactive power,
rotational speed of the rotor,
pitch angle of at least one rotor blade,
yaw angle of a nacelle harbouring the rotor, curtailment,
of each of the wind power converting units.

10. System according to one of the preceding claims 5 to 9, wherein the operational parameters (115a, 115b, 115c) of the wind power converting unit comprise at least one value of:
an active power output,
a reactive power output,
a rotational speed of the rotor,
a pitch angle of at least one rotor blade,
a yaw angle of a nacelle harbouring the rotor,
a curtailment,
a temperature of at least one component of the wind power converting unit,
an electrical property of output power.

11. System according to one of the preceding claims 5 to 10, wherein the wind power converting units (101_1,...,101_n) are arranged in at least two wind parks (109a, 109b, 109c), wherein each wind park has at least one connection terminal (127a, 127b, 127c) to which all wind power converting units of the respective wind park are connected and which is connected to a utility grid (129).

12. System according to one of the preceding claims 5 to 10, wherein each wind park comprises 3 to 200 wind power converting units spaced apart by a distance between 400 m and 2000 m,
wherein a distance (d) between centers of the two wind parks is in particular between 5 km and 50 km.

13. System according to one of the preceding claims, configured to perform software update of the central controller.

14. Method of providing electric energy, the system comprising:
providing plural energy providing units (101_1,...,101_n), each energy providing unit comprising measurement equipment;
measuring, by the measurement equipment of each energy providing unit, at least one operational parameter (115_1, 115_2, 115_3, 115a, 115b, 115c) of the energy providing unit;
measuring an environmental condition (117a, 117b, 117c), in particular wind condition, by at least one environmental sensor (103a, 103b, 103c) installed at or close to selected energy providing units;
using a central controller (107) communicatively connected with the energy providing units to perform at least one of:
supplying virtual sensor data to the energy providing units based on the environmental condition;
controlling (119a, 119b, 119c) operation of the energy providing units based on measurement results (115a, 115b, 115c) received from the measurement equipment of each of the energy providing units and based on the environmental condition (117a, 117b, 117c).
